# EUROPÄISCHE PATENTSCHRIFT

(11) **EP 2 401 119 B1**
(45) Veröffentlichungstag und Bekanntmachung des Hinweises auf die Patenterteilung: **24.11.2021**
(21) Anmeldenummer: 10702837.5
(22) Anmeldetag: 03.02.2010
(51) Int. Cl.: B05B 13/04, B25J 19/00

(54) **ROBOTER, INSBESONDERE LACKIERROBOTER**
ROBOT, IN PARTICULAR PAINTING ROBOT
ROBOT, EN PARTICULIER ROBOT DE PEINTURE

(30) Priorität: 27.02.2009 DE 102009010953
(43) Veröffentlichungstag der Anmeldung: 04.01.2012
(73) Patentinhaber: Dürr Systems AG, 74321 Bietigheim-Bissingen (DE)
(72) Erfinder: COLLMER, Andreas, 71665 Vaihingen/Enz (DE)
(74) Vertreter: Beier, Ralph
(86) Internationale Anmeldenummer: PCT/EP2010/000634
(87) Internationale Veröffentlichungsnummer: WO 2010/097159

(56) Entgegenhaltungen:
- EP-A1- 1 447 183
- EP-A1- 1 964 651
- JP-A- 59 007 598
- JP-A- 62 188 384
- JP-A- 2003 159 689
- US-A- 5 694 813

## Beschreibung

Die Erfindung betrifft einen Roboter gemäß dem Hauptanspruch, insbesondere einen Lackierroboter zur Lackierung von Kraftfahrzeugkarosseriebauteilen.

Herkömmliche Lackierroboter weisen mehrere relativ zueinander schwenk- oder drehbare Roboterglieder auf, die kinematisch hintereinander angeordnet sind und als Applikationsgerät beispielsweise einen Rotationszerstäuber führen, wobei der Rotationszerstäuber durch mehrere Versorgungsleitungen beispielsweise mit Lack, Spülmittel, Antriebsluft und Hochspannung versorgt wird. Problematisch ist hierbei die Führung der Versorgungsleitungen in den einzelnen Robotergliedern, da eine Änderung der Roboterstellung zu einer entsprechenden Änderung der erforderlichen Leitungslänge führt. Bei den bekannten Lackierrobotern sind die Versorgungsleitungen deshalb als Bündel durch ein Drehgelenk geführt, wobei das Bündel kinematisch vor und hinter dem Drehgelenk axial durch Zugentlastungen fixiert ist. Der bei einer Änderung der Roboterstellung erforderliche Längenausgleich wird dabei ausschließlich durch eine sichtbare Ausgleichsschlaufe zwischen den Zugentlastungen gewährleistet.

Nachteilig an der vorstehend beschriebenen herkömmlichen Leitungsführung bei einem Lackierroboter ist also zunächst die Tatsache, dass zur Gewährleistung des bei einer Roboterbewegung erforderlichen Längenausgleichs eine Ausgleichsschlaufe zwischen den Zugentlastungen erforderlich ist, wodurch die Versorgungsleitung unnötig lang ist, was hinsichtlich Kosten, Gewicht, Farbverlusten und den pneumatischen Steuerzeiten nachteilig ist.

Ein weiterer Nachteil der zum Längenausgleich erforderlichen Ausgleichsschlaufe ist der relativ große Platzbedarf der Ausgleichsschlaufe, die in der Regel über die Außenkontur des mehrgliedrigen Roboterarms hinausragt und damit den Bewegungsspielraum des Lackierroboters einengt.

Darüber hinaus sind die Herstellungskosten und der Montageaufwand bei dem vorstehend beschriebenen herkömmlichen Lackierroboter relativ groß, da zahlreiche axiale Zugentlastungen für die Versorgungsleitungen erforderlich sind und aufwendig montiert werden müssen.

Ein weiterer Nachteil der herkömmlichen Leitungsführung der Versorgungsleitungen bei einem Lackierroboter rührt daher, dass der Lackierroboter in der Regel auch eine Drehbewegung um eine im Wesentlichen senkrechte Drehachse ermöglicht, wobei die Versorgungsleitung auf Torsion belastet wird. Die axiale Zugentlastung verringert dabei die freie Schlauchlänge der Versorgungsleitung, auf welcher die auftretende Torsionsbelastung aufgenommen werden muss. Die axialen Zugentlastungen bei der herkömmlichen Leitungsführung führen also zu einer Vergrößerung der Torsionsbelastung, so dass zusätzliche Schlauchlänge vorgehalten werden muss, um die auftretende Torsionsbelastung aufnehmen zu können.

Ferner besteht ein Nachteil der herkömmlichen Leitungsführung bei Lackierrobotern darin, dass die Versorgungsleitungen nicht in einer Schlauchführungsebene geführt werden können, wodurch der Einsatz von molchbaren Versorgungsschläuchen erschwert wird.

Nachteilig ist ferner die zusätzliche mechanische Belastung der verwendeten Versorgungsschläuche und der zugehörigen Verschraubungen sowie der erhöhte Montage- und Demontageaufwand bei Schlauchmontage bzw. Schlauchwechsel. Ferner sind für die herkömmliche Leitungsführung in der Regel Spezialbauteile erforderlich, was ebenfalls nachteilig ist.

Zum Stand der Technik ist hinzuweisen auf JP 62 188384 A, JP 2003 159689 A, EP 1 447 183 A1, US 5 694 813 A und EP 1 964 651 A1.

Schließlich offenbart JP 59 007598 A einen Roboter gemäß dem Oberbegriff von Anspruch 1. Hierbei ermöglicht ein Spannelement einen Längenausgleich einer Versorgungsleitung in Abhängigkeit von der Roboterstellung. Allerdings ist dieser Längenausgleich noch nicht befriedigend.

Der Erfindung liegt deshalb die Aufgabe zugrunde, einen Lackierroboter mit einer entsprechend verbesserten Leitungsführung für die Versorgungsleitungen zu schaffen.

Diese Aufgabe wird durch einen Lackierroboter gemäß dem Hauptanspruch gelöst. Die Erfindung ist in dem beigefügten Satz von Ansprüchen dargelegt.

Der erfindungsgemäße Roboter weist mehrere Roboterglieder auf, die relativ zueinander schwenk- oder drehbar sind. Weiterhin verfügt der erfindungsgemäße Roboter über mindestens eine biegsame Versorgungsleitung, die von dem proximalen Roboterglied (z.B. einer ortsfest oder verschiebbar montierten Roboterbasis) zu dem distalen Roboterglied (z.B. einem Roboterarm) geführt ist. Der erfindungsgemäße Roboter zeichnet sich dadurch aus, dass die Versorgungsleitung in dem proximalen Roboterglied bezüglich der Längsachse der Versorgungsleitung axial beweglich ist, so dass die Versorgungsleitung bei einer Schwenkbewegung des Roboters eine Ausgleichsbewegung ausführen kann.

Dies ist vorteilhaft, weil der Längenbedarf der Versorgungsleitung in dem Roboter in Abhängigkeit von der Roboterstellung schwankt, so dass die axiale Ausgleichsbewegung der Versorgungsleitung den schwankenden Längenbedarf kompensieren kann.

Im Gegensatz zu den eingangs beschriebenen herkömmlichen Lackierrobotern ist die Versorgungsleitung bei dem erfindungsgemäßen Roboter also nicht axial fixiert, so dass in der Regel auf axiale Zugentlastungen verzichtet werden kann. Die Erfindung ist jedoch nicht auf Roboter beschränkt, die überhaupt keine axialen Zugentlastungen für die Versorgungsleitung aufweisen. Vielmehr umfasst die Erfindung auch solche Roboter, bei denen beispielsweise in dem distalen Roboterglied eine axiale Zugentlastung vorgesehen ist.

Gemäß der Erfindung weist der Roboter zusätzlich ein mechanisches Spannelement auf, das eine axial und proximal ausgerichtete Rückzugskraft auf die Versorgungsleitung ausübt. Wenn der Längenbedarf der Versorgungsleitung aufgrund der Roboterbewegung abnimmt, so zieht das Spannelement die Versorgungsleitung in proximaler Richtung zurück. Wenn der Längenbedarf der Versorgungsleitung dagegen aufgrund der Roboterbewegung zunimmt, so wird die Versorgungsleitung durch die Roboterbewegung entgegen der Rückzugskraft des Spannelements in distaler Richtung gezogen.

In dem bevorzugten Ausführungsbeispiel der Erfindung ist das Spannelement ein Federstab, wie er an sich aus dem Stand der Technik bekannt ist, so dass eine Biegebelastung der Versorgungsleitung zu einer entsprechenden Rückstellkraft führt. Ein derartiger Federstab kann aus Federstahl bestehen und die Versorgungsleitung auf einem Abschnitt spiralförmig umgeben. Alternativ besteht die Möglichkeit, dass der Federstab in der Versorgungsleitung angeordnet ist. Das Spannelement kann also ganz allgemein Federelemente aufweisen, die bezüglich der Versorgungsleitung innen und/oder außen angeordnet sein können.

Die Rückstellkraft des Federstabs wirkt zunächst in radialer Richtung, jedoch wird die Rückstellkraft bei einer entsprechenden Leitungsführung in die axial wirkende Rückzugskraft umgewandelt.

Anstelle eines Federstabs können im Rahmen der Erfindung auch andere Spannelemente eingesetzt werden, wie beispielsweise elastische Seilzüge, Spiralfedern oder GFK-Stäbe, welche die Versorgungsleitung umgeben und einerseits an einem gehäusefesten Widerlager und andererseits an einem an der Versorgungsleitung montierten Leitungsflansch angreifen, so dass die Spiralfeder den Leitungsflansch zusammen mit der Versorgungsleitung axial von dem gehäusefesten Widerlager weg drückt.

Eine weiteres Beispiel für ein im Rahmen der Erfindung verwendbares Spannelement sind die Leitungsführungen, die von der Firma IGUS GmbH unter der Marke Triflex® vertrieben werden.

Ferner kann auch ein Spannelement verwendet werden, wie es in DE 202 21 807 U1 beschrieben ist.

Das Spannelement kann die axiale Rückzugskraft also auch direkt erzeugen, d.h. ohne eine Umwandlung aus einer radialen Rückstellkraft. Beispielsweise kann das Spannelement hierzu als Spiralfeder ausgebildet sein, welche die Versorgungsleitung außen oder innen umgibt und mit der Wandung der Versorgungsleitung verbunden ist. Dies hat zur Folge, dass eine axiale Dehnung der Versorgungsleitung mit einer entsprechenden axialen Dehnung der Spiralfeder verbunden ist, wodurch die axiale Rückzugskraft erzeugt wird.

Zu dem Spannelement ist weiterhin zu erwähnen, dass das Spannelement in Bezug auf das proximale Roboterglied ortsfest angeordnet ist und die Rückzugskraft in dem proximalen Roboterglied erzeugt.

Gemäß der Erfindung weist die Versorgungsleitung eine Ausgleichsschlaufe auf, die an dem proximalen Roboterglied angeordnet ist, wobei die Ausgleichsschlaufe bei einer Roboterbewegung die vorstehend erwähnte axiale Ausgleichsbewegung der Versorgungsleitung ermöglicht. Die Länge der Ausgleichsschlaufe ist also vorzugsweise mindestens so groß wie die maximale Schwankung der Länge der Versorgungsleitung im Betrieb des Roboters.

Hierbei weist die Ausgleichsschlaufe vorzugsweise zwei Leitungsschenkel auf, wobei das Spannelement in Form des Federstabs an dem proximalen Leitungsschenkel oder an dem distalen Leitungsschenkel der Ausgleichsschlaufe angreifen kann. Weiterhin ist zu erwähnen, dass die Versorgungsleitung in dem bevorzugten Ausführungsbeispiel im Wesentlichen in einer Schlauchführungsebene verläuft und zwar unabhängig von der jeweiligen Roboterstellung. Dies hat den Vorteil, dass die Versorgungsleitung bei einer Änderung der Roboterstellung nur auf Biegung belastet wird, nicht dagegen auf Torsion, was die Verlegung von molchbaren Schläuchen erleichtert.

Gemäß der Erfindung weist der Roboter ein erstes Roboterglied (z.B. Roboterbasis) auf, das wahlweise ortsfest montiert sein kann oder an einer Verfahrschiene verfahrbar ist, was an sich aus dem Stand der Technik bekannt ist.

Darüber hinaus ist ein zweites Roboterglied vorgesehen, das drehbar an dem ersten Roboterglied angebracht ist, wobei die Drehachse des zweiten Roboterglieds vorzugsweise senkrecht ausgerichtet ist.

Das zweite Roboterglied ist vorzugsweise unterhalb des ersten Roboterglieds drehbar angebracht, jedoch kann das zweite Roboterglied alternativ auch oberhalb des ersten Roboterglieds oder seitlich davon drehbar angeordnet sein.

Weiterhin ist ein drittes Roboterglied in Form eines Roboterarms vorgesehen, der schwenkbar an dem zweiten Roboterglied angebracht ist, wobei die Schwenkachse des dritten Roboterglieds vorzugsweise waagerecht ausgerichtet ist.

An dem dritten Roboterglied ist ein viertes Roboterglied in Form eines Roboterarms schwenkbar angebracht, wobei auch die Schwenkachse des vierten Roboterglieds vorzugsweise waagerecht ausgerichtet ist.

Das vierte Roboterglied bildet einen distalen Roboterarm, der eine mehrachsige Roboterhandachse führt, wie sie an sich aus dem Stand der Technik bekannt ist und deshalb nicht näher beschrieben werden muss.

Die Roboterhandachse führt schließlich ein Werkzeug, wie beispielsweise einen Zerstäuber und vorzugsweise einen Rotationszerstäuber. Die Erfindung umfasst jedoch auch andere Robotertypen, die ein anderes Werkzeug führen, wie beispielsweise einen Düsenkopf zur Applikation von Nahtabdichtmittel oder einen Applikationskopf zur Applikation einer Flüssigfolie. Bei dem vorstehend beschriebenen Aufbau des erfindungsgemäßen Roboters kann die Versorgungsleitung in einem oder mehreren oder sogar allen Robotergliedern axial beweglich sein. Darüber hinaus ist die Versorgungsleitung vorzugsweise auch in den Schwenk- bzw. Drehgelenken zwischen den benachbarten Robotergliedern axial beweglich, um die eingangs beschriebenen Ausgleichsbewegung bei einer Änderung der Roboterstellung zu ermöglichen.

Bei der Beschreibung des Standes der Technik wurde eingangs erwähnt, dass die zum Längenausgleich erforderliche Ausgleichsschlaufe in der Regel über die Außenkontur des Roboterarms hinausragt und dadurch den Bewegungsspielraum des Roboters einschränkt, da eine Kollision der aus der Außenkontur herausragenden Ausgleichsschlaufe mit den zu beschichtenden Kraftfahrzeugkarosseriebauteilen oder den Begrenzungen der Lackierkabine in jedem Fall verhindert werden muss. Bei dem erfindungsgemäßen Roboter ist die Leitungsführung dagegen so gestaltet, dass die Versorgungsleitung unabhängig von der Roboterstellung in der Schwenkebene nicht über die Außenkontur des jeweiligen Roboterglieds hinausragt. Dies wird dadurch erreicht, dass das mechanische Spannelement eine so große axiale Rückzugskraft auf die Versorgungsleitung ausübt, dass die Versorgungsleitung unabhängig von der Roboterstellung stets so glattgezogen wird, dass die Versorgungsleitung nicht über die Außenkontur des jeweiligen Roboterarms hinausragt.

In dem bevorzugten Ausführungsbeispiel der Erfindung sind drei kinematisch hintereinander angeordnete und relativ zueinander schwenkbare Roboterglieder vorgesehen, wobei die kinematisch außen liegenden Roboterglieder im Wesentlichen in einer gemeinsamen Schwenkebene angeordnet sind, während das kinematisch dazwischen liegende Roboterglied seitlich gegenüber der Schwenkebene versetzt angeordnet ist und dadurch Platz lässt für die Versorgungsleitung. Hierbei überbrückt die Versorgungsleitung also den Zwischenraum zwischen den kinematisch außen liegenden Robotergliedern und verläuft in dem Zwischenraum vorzugsweise außerhalb des kinematisch in der Mitte liegenden Robotergliedes seitlich daneben. Zum einen bietet diese Anordnung den Vorteil, dass die Versorgungsleitung auf ihrer gesamten Länge in einer Schlauchführungsebene verlaufen kann, was die Molchbarkeit der Versorgungsleitung erleichtert. Zum anderen kann bei dieser Art der Leitungsführung auf Abwinklungen der Versorgungsleitungen weitgehend verzichtet werden.

Der im Rahmen der Erfindung verwendete Begriff einer Versorgungsleitung stellt vorzugsweise auf ein Schlauchpaket ab, das mehrere Schlauchleitungen umfasst, wobei die einzelnen Schlauchleitungen beispielsweise Antriebsluft für einen Rotationszerstäuber, Beschichtungsmittel (z.B. Lack), Lösemittel für das Beschichtungsmittel, Pulsluft und/oder Hochspannung für einen elektrostatischen Beschichtungsbetrieb des Zerstäubers übertragen können. Bei den Versorgungsleitungen kann es sich also um fluidische oder elektrische Leitungen handeln.

In dem bevorzugten Ausführungsbeispiel weist der erfindungsgemäße Roboter weiterhin einen baulich integrierten Farbwechsler auf, der vorzugsweise an oder in dem distalen Roboterarm angebracht ist, wobei die fluidischen Versorgungsleitungen vorzugsweise bis zu dem Farbwechsler hin molchbar sind.

Ferner ist zu erwähnen, dass die Erfindung nicht auf den vorstehend beschriebenen Roboter als einzelnes Gerät beschränkt ist, sondern auch eine komplette Lackieranlage umfasst, die mindestens einen derartigen Lackierroboter aufweist.

Schließlich umfasst die Erfindung auch die neuartige Verwendung eines derartigen Roboters in einer Beschichtungsanlage zur Beschichtung von Kraftfahrzeugkarosseriebauteilen.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Seitenansicht eines bevorzugten Ausführungsbeispiels eines erfindungemäßen Lackierroboters,
- Figur 2: eine Aufsicht auf den Lackierroboter aus Figur 1,
- Figur 3: eine Perspektivansicht des Lackierroboters aus den Figuren 1 und 2,
- Figur 4A: eine schematische Darstellung eines Federstabs zum axialen Spannen der Versorgungsleitung bei dem Lackierroboter gemäß den Figuren 1-3, sowie,
- Figur 4B: eine schematische Darstellung des Federstabs im ausgelenkten Zustand.

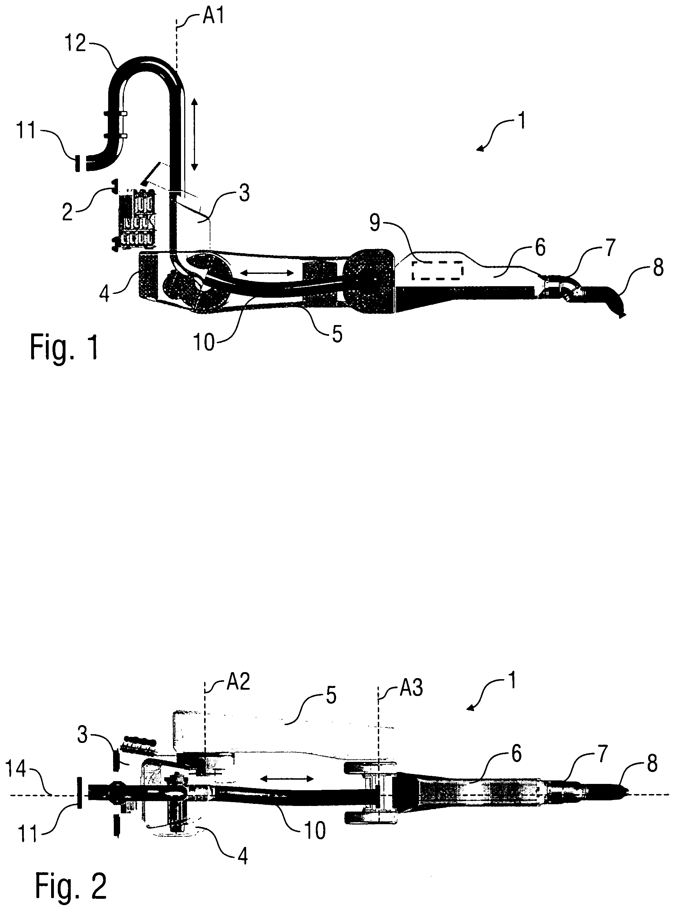

Die Figuren 1-3 zeigen verschiedene Ansichten eines erfindungsgemäßen Lackierroboters 1, der beispielsweise zur Lackierung von Kraftfahrzeugkarosseriebauteilen in einer Lackieranlage eingesetzt werden kann.

Hierbei kann der Lackierroboter 1 über einen Anschlussflansch 2 wahlweise ortsfest oder linear verfahrbar montiert werden.

Der Anschlussflansch 2 befindet sich hierbei an einer Roboterbasis 3, wobei die Roboterbasis 3 an ihrer Unterseite ein drehbares Roboterglied 4 trägt, das relativ zu der Roboterbasis 3 um eine senkrechte Drehachse A1 drehbar ist.

An dem drehbaren Roboterglied 4 ist wiederum ein Roboterarm 5 schwenkbar angebracht, wobei der Roboterarm 5 relativ zu dem Roboterglied 4 um eine waagerecht ausgerichtete Schwenkachse A2 schwenkbar ist und in der üblichen Fachterminologie auf dem Gebiet der Robotertechnik auch als "Arm 1" bezeichnet wird.

An dem distalen Ende des Roboterarms 5 ist ein distaler Roboterarm 6 schwenkbar montiert, wobei der distale Roboterarm 6 entsprechend der üblichen Fachterminologie auf dem Gebiet der Lackierroboter als "Arm 2" bezeichnet wird und relativ zu dem Roboterarm 5 um eine waagerechte verlaufende Schwenkachse A3 schwenkbar ist.

An dem distalen Ende des Roboterarms 6 ist eine mehrachsige Roboterhandachse 7 angebracht, die einen herkömmlichen Rotationszerstäuber 8 hochbeweglich positionieren kann.

Der Rotationszerstäuber 8 wird hierbei von einem Farbwechsler 9 mit der gewünschten Farbe versorgt, wobei der Farbwechsler 9 in dem distalen Roboterarm 6 angeordnet ist und damit relativ nah an dem Rotationszerstäuber 8, wodurch die Farbwechselverluste minimiert werden.

Die Versorgung des Rotationszerstäubers 8 und des Farbwechslers 9 erfolgt durch eine Versorgungsleitung 10 in Form eines Schlauchpakets, das zahlreiche Schlauchleitungen für die verschiedenen Medien (z.B. Lacke, Spülmittel, Antriebsluft, etc.) umfasst. Die Versorgungsleitung 10 geht hierbei von einer Blockschelle 11 aus und bildet zunächst eine Ausgleichsschlaufe 12, die eine axiale Ausgleichsbewegung der Versorgungsleitung 10 in Pfeilrichtung ermöglicht, wenn die Roboterbewegung eine Längenänderung der Versorgungsleitung 10 erfordert.

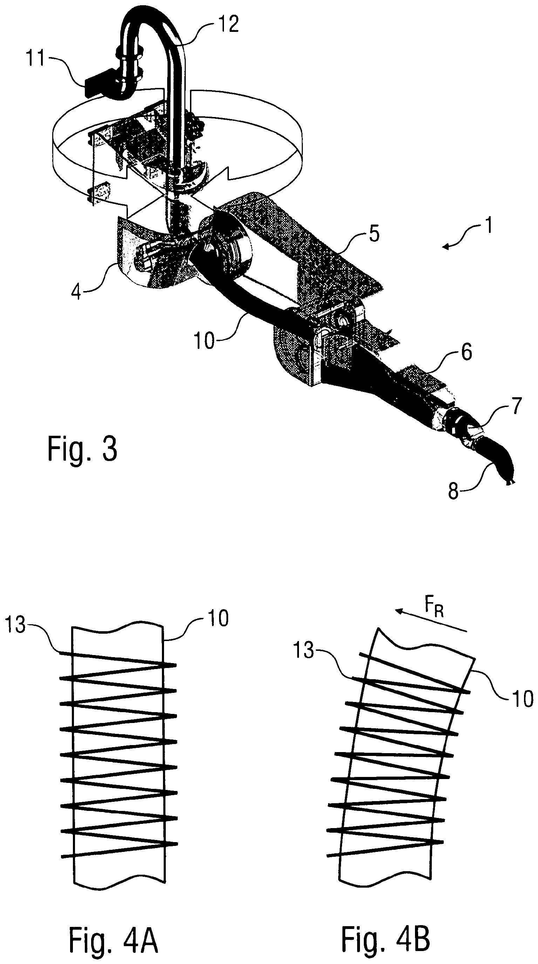

Die Versorgungsleitung 10 wird hierbei durch ein mechanisches Spannelement in Form eines Federstabs 13 (vgl. Figuren 4A und 4B) gespannt, wobei das Spannelement 13 eine axiale und proximal ausgerichtete Rückzugskraft auf die Versorgungsleitung 10 ausübt. Das Spannelement 13 versucht also, die Versorgungsleitung 10 in der Darstellung gemäß Figur 1 nach oben aus der Roboterbasis 3 herauszuziehen. Dadurch wird erreicht, dass die Versorgungsleitung 10 unabhängig von der Roboterstellung nicht über die Außenkontur des Roboterarms 5 hinausragt, wie insbesondere aus der Seitenansicht in Figur 1 ersichtlich ist. Dies ist vorteilhaft, weil die Versorgungsleitung 10 auf diese Weise den Bewegungsspielraum des Lackierroboters 1 nicht einschränkt.

Weiterhin ist aus Figur 2 ersichtlich, dass die Versorgungsleitung 10 auf ihrer gesamten Länge im Wesentlichen in einer Schlauchführungsebene 14 verläuft. Dies ist vorteilhaft, weil die Versorgungsleitung 10 auf diese Weise im Wesentlichen nur auf Biegung beansprucht wird, nicht aber auf Torsion, was für die Molchbarkeit der Versorgungsleitung 10 von Vorteil ist.

Zu den Figuren 4A und 4B ist zu bemerken, dass das Spannelement 13 alternativ auch mit der Wandung der Versorgungsleitung 10 verbunden sein kann, so dass eine axiale Dehnung der Versorgungsleitung 10 mit einer gleich großen axialen Dehnung des Spannelements 13 verbunden ist, was zu einer entsprechenden axialen Rückzugskraft führt.

### Bezugszeichenliste:

- 1: Lackierroboter
- 2: Anschlussflansch
- 3: Roboterbasis
- 4: Roboterglied
- 5: Roboterarm
- 6: Roboterarm
- 7: Roboterhandachse
- 8: Rotationszerstäuber
- 9: Farbwechsler
- 10: Versorgungsleitung
- 11: Blockschelle
- 12: Ausgleichsschlaufe
- 13: Spannelement
- 14: Schlauchführungsebene
- A1: Drehachse
- A2: Schwenkachse
- A3: Schwenkachse

## Patentansprüche

1. Roboter (1), insbesondere Lackierroboter zur Lackierung von Bauteilen wie Kraftfahrzeugkarosseriebauteilen, mit
a) mehreren Robotergliedern (3, 4, 5, 6), die relativ zueinander schwenkbar sind, nämlich
a1) einem ersten Roboterglied (3), das ortsfest oder an einer Verfahrschiene verfahrbar montiert ist,
a2) einem zweiten Roboterglied (4), das drehbar an dem ersten Roboterglied (3) angebracht ist,
a3) einem dritten Roboterglied (5) in Form eines Roboterarms, der in einer Schwenkebene an dem zweiten Roboterglied (4) angebracht ist, und
a4) einem vierten Roboterglied (6) in Form eines Roboterarms, der schwenkbar an dem dritten Roboterglied (5) angebracht ist, und
b) mindestens einer biegsamen Versorgungsleitung (10), die von dem ersten Roboterglied als proximalen Roboterglied (3) zu dem vierten Roboterglied als distalen Roboterglied (6) geführt ist,
c) wobei die Versorgungsleitung (10) in dem proximalen Roboterglied (3) bezüglich der Längsachse der Versorgungsleitung (10) axial beweglich ist, so dass die Versorgungsleitung (10) bei einer Schwenkbewegung des Roboters (1) eine axiale Ausgleichsbewegung ausführen kann,
d) wobei die Versorgungsleitung (10) eine Ausgleichsschlaufe (12) aufweist, die an dem proximalen Roboterglied angeordnet ist, wobei die Ausgleichsschlaufe (12) bei einer Schwenkbewegung des Roboters (1) die axiale Ausgleichsbewegung der Versorgungsleitung (10) ermöglicht,
e) einem mechanischen Spannelement (13),
**dadurch gekennzeichnet, dass**
f) das Spannelement (13) ortsfest an dem proximalen Roboterglied angeordnet und geeignet ist, die Versorgungsleitung (10) aus dem proximalen Roboterglied (3) herauszuziehen,
g) wobei das Spannelement (13) eine so große axiale Rückzugskraft auf die Versorgungsleitung (10) ausübt, dass die Versorgungsleitung unabhängig von der Roboterstellung stets so glatt gezogen wird, dass die Versorgungsleitung (10) bezüglich der Schwenkebene des dritten Roboterglieds (5) innerhalb der Außenkontur des dritten Roboterglieds (5) liegt.

2. Roboter (1) nach Anspruch 1, **dadurch gekennzeichnet,**
a) **dass** die benachbarten Roboterglieder (3, 4, 5, 6) durch ein Gelenk drehbar oder schwenkbar miteinander verbunden sind, und
b) **dass** die Versorgungsleitung (10) durch das Gelenk hindurch geführt ist.

3. Roboter (1) nach einem der vorhergehenden Ansprüche, **dadurch gekennzeichnet,**
a) **dass** das Spannelement (13) ein Federstab ist, oder
b) **dass** das Spannelement (13) eine Spiralfeder aufweist, die innen oder außen fest mit der Wandung der Versorgungsleitung (10) verbunden ist, so dass die Spiralfeder die gleiche Längenänderung erfährt wie die Versorgungsleitung (10) und die entsprechende axiale Rückzugskraft erzeugt.

4. Roboter (1) nach einem der vorhergehenden Ansprüche, **dadurch gekennzeichnet, dass** die Ausgleichsschlaufe (12) zwei Leitungsschenkel aufweist, wobei das Spannelement an dem proximalen Leitungsschenkel oder an dem distalen Leitungsschenkel der Ausgleichsschlaufe (12) angreift.

5. Roboter (1) nach einem der vorhergehenden Ansprüche,
**dadurch gekennzeichnet, dass** die Versorgungsleitung (10) im Wesentlichen in einer Schlauchführungsebene (14) verläuft.

6. Roboter (1) nach einem der vorhergehenden Ansprüche, **gekennzeichnet durch**
a) eine Roboterhandachse (7), die an dem vierten Roboterglied (6) angebracht ist, und
b) ein Werkzeug (8), das an der Roboterhandachse (7) angebracht ist, insbesondere in Form eines Zerstäubers.

7. Roboter (1) nach Anspruch 6, **dadurch gekennzeichnet,**
a) **dass** die Drehachse (A1) des zweiten Roboterglieds im Wesentlichen senkrecht ausgerichtet ist, und/oder
b) **dass** das dritte Roboterglied (5) und das vierte Roboterglied (6) parallele Schwenkachsen (A2, A3) aufweisen, und
c) **dass** die Schwenkachsen (A2, A3) des dritten Roboterglieds (5) und des vierten Roboterglieds (6) im Wesentlichen waagerecht ausgerichtet sind, und
d) **dass** die Versorgungsleitung (10) in dem zweiten Roboterglied (4) axial beweglich ist, und
e) **dass** die Versorgungsleitung (10) in dem dritten Roboterglied (5) axial beweglich ist, und
f) **dass** die Versorgungsleitung (10) in einem Drehgelenk zwischen dem ersten Roboterglied (3) und dem zweiten Roboterglied (4) axial beweglich ist, und
g) **dass** die Versorgungsleitung (10) in einem Schwenkgelenk zwischen dem zweiten Roboterglied (4) und dem dritten Roboterglied (5) axial beweglich ist, und
h) **dass** die Versorgungsleitung (10) in einem Schwenkgelenk zwischen dem dritten Roboterglied (5) und dem vierten Roboterglied (6) axial beweglich ist.

8. Roboter (1) nach einem der vorhergehenden Ansprüche, **dadurch gekennzeichnet,**
a) **dass** die Versorgungsleitung (10) bis in das distale Roboterglied (6) hinein molchbar ist, und/oder
b) **dass** die Versorgungsleitung (10) ein Schlauchpaket aufweist, das mehrere Schlauchleitungen umfasst.

9. Roboter (1) nach einem der vorhergehenden Ansprüche, **dadurch gekennzeichnet, dass** die Versorgungsleitung (10) folgende Medien führt und/oder folgende Leitungen enthält:
a) Antriebsluft für einen Rotationszerstäuber,
b) Beschichtungsmittel, insbesondere Lack,
c) Lösemittel für das Beschichtungsmittel,
d) Pulsluft,
e) Hochspannung für einen elektrostatischen Beschichtungsbetrieb,
f) elektrische Signalleitungen, und/oder
g) Lichtwellenleiter.

10. Roboter (1) nach einem der Ansprüche 6 bis 9, **gekennzeichnet durch** einen Farbwechsler (9), der an oder in dem vierten Roboterglied (6) angebracht ist.

11. Beschichtungsanlage zur Beschichtung von Kraftfahrzeugkarosseriebauteilen mit einem Roboter (1) nach einem der vorhergehenden Ansprüche.

12. Verwendung eines Roboters (1) nach einem der Ansprüche 1 bis 10 in einer Beschichtungsanlage zur Beschichtung von Kraftfahrzeugkarosseriebauteilen.

## Claims

1. Robot (1), in particular painting robot for painting components, for example motor vehicle body components, with
a) a plurality of robot elements (3, 4, 5, 6) which are pivotable relative to each other, namely
a1) a first robot element (3) that is stationary or movable on a travel rail,
a2) a second robot element (4) which is attached rotatably to the first robot element (3),
a3) a third robot element (5) in the form of a robot arm which is attached in a pivot plane to the second robot element (4),
a4) a fourth robot element (6) in the form of a robot arm which is attached pivotably to the third robot element (5), and
b) at least one bendable supply line (10) which is guided from the first robot element (3) as a proximal robot element (3) to the fourth robot element as a distal robot element (6),
c) wherein the supply line (10) in the proximal robot element (3) is axially movable with regard to the longitudinal axis of the supply line (10) so that the supply line (10) can perform an axial compensatory movement during a pivoting movement of the robot (1),
d) wherein the supply line (10) comprises a compensation loop (12) which is located on the proximal robot element, wherein the compensation loop (12) allows the axial compensatory movemenent of the supply line (10) in a pivot movement of the robot (1),
e) a mechanical tensioning element (13),
**characterized in that**
f) the tensioning element (13) is arranged stationary with regard to the proximal robot element (3) and suitable to pull the supply line (10) out of the proximal robot element (3) ,
g) wherein the tensioning element (13) applies such a large axial restoring force to the supply line (10) that the supply line (10) is always smoothened independently of the robot position, so that the supply line (10) lies within the outer contour of the third robot element (5) with regard to the pivot plane of the third robot element (5) .

2. Robot (1) according to Claim 1, **characterized in that**
a) the adjacent robot elements (3, 4, 5, 6) are rotatably or pivotably connected with each other by a jont, and
b) the supply line (10) is passed through the joint.

3. Robot (1) according to any one of the preceding claims, **characterized in that**
a) the tensioning element (13) is a spring rod, or
b) the tensioning element (13) includes a spiral spring which is inside or outside connected fixedly with the wall of the supply line (10) so that the spiral spring experiences the same change in length as the supply line (10) and generates the corresponding axial restoring force.

4. Robot (1) according to one of the prceding claims, **characterized in that** the compensation loop (12) includes two line legs wherein the tensioning element engages on the proximal line leg or on the distal line leg of the compensation loop (12).

5. Robot (1) according to any one of the preceding claims, **characterized in that** the supply line (10) subtstantially runs in a hose guide plane (14).

6. Robot (1) according to any one of the preceding claims, **characterized by,**
a) a robot wrist (7) which is attached to the fourth robot element (6), and
b) b tool (8), which is attached to the robot wrist (7), in particular in the form of an atomizer.

7. Robot (1) according to Claim 6, **characterized in that**
a) the rotary axis (A1) of the second robot element is substantially vertically aligned, and/or
b) the third robot element (5) and the fourth robot element (5) have parallel pivot axes (A2, A3), and
c) the pivot axes (A2, A3) of the third robot element (5) and the fourth robot element (6) are substantially horizontally aligned, and
d) the supply line (10) is movable axially in the second robot element (4), and
e) the supply line (10) is movable axially in the third robot element (5), and
f) the supply line (10) is movable axially in a rotating joint between the first robot element (3) and the second robot element (4), and
g) the supply line (10) is movable axially in a pivoting joint between the second robot element (4) and the third robot element (5), and
h) the supply line (10) is movable axially in a pivoting joint between the third robot element (5) and the fourth robot element (6).

8. Robot (1) according to any one of the preceding claims, **characterized in that**
a) the supply line (10) is pigable up to and into the distal robot element (6), and/or
b) the supply line (10) comprises a hose package which includes a plurality of hose lines.

9. Robot (1) according to any one of the preceding claims, **characterized in that** the supply line (10) guides the following media and/or contains the following lines:
a) driving air for a rotary atomizer,
b) coating material, in particular paint,
c) solvent for the coating material,
d) pulsed air,
e) high voltage for an electrostatic coating operation,
f) electrical signaling lines, and/or
f) optical wave guides.

10. Robot (1) according to any one of the claims 6 to 9, **characterized by** a colour changer (9) installed on or in the fourth robot element (6).

11. Coating plant for coating motor vehicle body components with a robot (1) according to any one of the preceding claims.

12. Use of a robot (1) according to any one of Claims 1 to 10 in a coating plant for coating motor vehicle body components.

## Revendications

1. Robot (1), plus particulièrement robot de peinture, pour la peinture de composants tels que des composants de carrosserie de véhicule automobile, avec
a) plusieurs membres de robot (3, 4, 5, 6), qui peuvent pivoter les uns par rapport aux autres, à savoir
a1)un premier membre de robot (3), qui est monté de manière fixe ou de manière mobile sur une glissière,
a2) un deuxième membre de robot (4), qui est monté de manière rotative sur le premier membre de robot (3),
a3) un troisième membre de robot (5) sous la forme d'un bras de robot, qui est monté dans un plan de pivotement sur le deuxième membre de robot (4) et
a4) un quatrième membre de robot (6) sous la forme d'un bras de robot, qui est monté de manière pivotante sur le troisième membre de robot (5) et
b) au moins une conduite d'alimentation flexible (10) qui est guidée du premier membre de robot en tant que membre de robot proximal (3) vers le quatrième membre de robot en tant que membre de robot distal (6),
c) dans lequel la conduite d'alimentation (10) est mobile axialement dans le membre de robot proximal (3) par rapport à l'axe longitudinal de la conduite d'alimentation (10), de façon à ce que la conduite d'alimentation (10) puisse effectuer un mouvement de compensation axial lors d'un mouvement de pivotement du robot (1),
d) dans lequel la conduite d'alimentation (10) comprend une boucle de compensation (12) qui est disposée sur le membre de robot proximal, dans lequel la boucle de compensation (12) permet, lors d'un mouvement de pivotement du robot (1), le mouvement de compensation axial de la conduite d'alimentation (10),
e) un élément de serrage mécanique (13),
**caractérisé en ce que**
f) l'élément de serrage (13) est disposé de manière fixe sur le membre de robot proximal et est conçu pour extraire la conduite d'alimentation (10) hors du membre de robot proximal (3),
g) dans lequel l'élément de serrage (13) exerce, sur la conduite d'alimentation (10), une force de rappel axiale telle que la conduite d'alimentation est toujours tirée de manière lisse indépendamment de la position du robot, de façon à ce que la conduite d'alimentation (10) se trouve, par rapport au plan de pivotement du troisième membre de robot (5), à l'intérieur du contour externe du troisième membre de robot (5).

2. Robot (1) selon la revendication 1, **caractérisé en ce que**
a) les membres du robot (3, 4, 5, 6) adjacents sont reliés entre eux de manière rotative ou pivotante par une articulation et
b) la conduite d'alimentation (10) est guidée à travers l'articulation.

3. Robot (1) selon l'une des revendications précédentes, **caractérisé en ce que**
a) l'élément de serrage (13) est une barre élastique ou
b) l'élément de serrage (13) comprend un ressort en spirale, qui est relié, à l'intérieur ou à l'extérieur, fermement avec la paroi de la conduite d'alimentation (10), de façon à ce que le ressort en spirale subisse la même variation de longueur que la conduite d'alimentation (10) et génère la force de rappel axiale correspondante.

4. Robot (1) selon l'une des revendications précédentes, **caractérisé en ce que** la boucle de compensation (12) comprend deux branches de conduite, dans lequel l'élément de serrage s'appuie contre la branche de conduite proximale ou contre la branche de conduite distale de la boucle de compensation (12).

5. Robot (1) selon l'une des revendications précédentes, **caractérisé en ce que** la conduite d'alimentation (10) s'étend globalement dans un plan de guidage de tuyau (14).

6. Robot (1) selon l'une des revendications précédentes, **caractérisé par**
a) un poignet de robot (7), qui est monté sur le quatrième membre de robot (6) et
b) un outil (8), qui est monté sur le poignet de robot (7), plus particulièrement sous la forme d'un pulvérisateur.

7. Robot (1) selon la revendication 6, **caractérisé en ce que**
a) l'axe de rotation (A1) du deuxième membre de robot est orienté globalement verticalement et/ou
b) le troisième membre de robot (5) et le quatrième membre de robot (6) présentent des axes de pivotement (A2, A3) parallèles et
c) les axes de pivotement (A2, A3) du troisième membre de robot (5) et du quatrième membre de robot (6) sont orientés globalement horizontalement et
d) la conduite d'alimentation (10) est mobile axialement dans le deuxième membre de robot (4) et
e) la conduite d'alimentation (10) est mobile axialement dans le troisième membre de robot (5) et
f) la conduite d'alimentation (10) est mobile axialement dans une articulation rotative entre le premier membre de robot (3) et le deuxième membre de robot (4) et
g) la conduite d'alimentation (10) est mobile axialement dans une articulation pivotante entre le deuxième membre de robot (4) et le troisième membre de robot (5) et
h) la conduite d'alimentation (10) est mobile axialement dans une articulation pivotante entre le troisième membre de robot (5) et le quatrième membre de robot (6).

8. Robot (1) selon l'une des revendications précédentes, **caractérisé en ce que**
a) la conduite d'alimentation (10) peut être raclée jusque dans le membre de robot distal (6) et/ou
b) la conduite d'alimentation (10) comprend un ensemble de tuyaux qui comprend plusieurs conduites flexibles.

9. Robot (1) selon l'une des revendications précédentes, **caractérisé en ce que** la conduite d'alimentation (10) conduit les fluides suivants et/ou contient les conduites suivantes :
a) air d'entraînement pour un pulvérisateur rotatif,
b) produit de revêtement, plus particulièrement de la peinture,
c) solvant pour le produit de revêtement,
d) air pulsé,
e) haute tension pour un mode de revêtement électrostatique,
f) conduites de signalisation électrique et/ou
g) fibres optiques.

10. Robot (1) selon l'une des revendications 6 à 9, **caractérisé par** un changeur de couleur (9), qui est monté sur ou dans le quatrième membre de robot (6).

11. Installation de revêtement pour le revêtement de composants de carrosserie de véhicule automobile avec un robot (1) selon l'une des revendications précédentes.

12. Utilisation d'un robot (1) selon l'une des revendications 1 à 10 dans une installation de revêtement pour le revêtement de composants de carrosserie de véhicule automobile.
